# EUROPEAN PATENT APPLICATION

(11) **EP 3 468 120 A1**
(43) Date of publication of application: **10.04.2019**
(21) Application number: 17819039.3
(22) Date of filing: 02.06.2017
(51) Int. Cl.: H04L 12/827

(54) **PACKET TRANSMISSION METHOD, DEVICE AND SYSTEM**

(30) Priority: 28.06.2016 CN 201610485497
(71) Applicant: Huawei Technologies Co., Ltd., Longgang District Shenzhen, Guangdong 518129 (CN)
(72) Inventor: YOU, Jianjie, Shenzhen Guangdong 518129 (CN); WEI, Hanyu, Shenzhen Guangdong 518129 (CN)
(74) Representative: Gill Jennings & Every LLP
(86) International application number: PCT/CN2017/087102
(87) International publication number: WO 2018/001042

(57) **Abstract**

The present invention discloses a packet transmission method, apparatus, and system, and pertains to the security field. The method is applied to a server of a content provider, and the method includes: receiving an application request sent by a user side; obtaining encrypted data of original data requested by the application request; generating a first packet that includes the encrypted data; adding index information to the first packet, to obtain a second packet; sending the second packet to a gateway in an operator network; and determining, by the gateway, a transmission parameter corresponding to the index information, and sending the encrypted data to the user side based on the transmission parameter. Index information that can be identified by the gateway in the operator network is added to a packet, so that a transmission parameter can be determined based on only the index information. Therefore, when data is generally encrypted, a content-aware service of the network operator can be normally used without changing an existing encryption manner and an existing service procedure, and without compromising security and privacy of the service.

## Description

This application claims priority to Chinese Patent Application No. 201610485497.X, filed with the Chinese Patent Office on June 28, 2016 and entitled "PACKET TRANSMISSION METHOD, APPARATUS, AND SYSTEM", which is incorporated herein by reference in its entirety.

### TECHNICAL FIELD

The present invention relates to the security field, and in particular, to a packet transmission method, apparatus, and system.

### BACKGROUND

As people pay more attention to network access security and privacy protection, it is common for a content provider to encrypt a data stream transmitted to a network. However, after the data stream is encrypted, application content transmitted in the data stream is also encrypted. A network operator cannot obtain the application content, cannot identify a service type in the data stream, and therefore, cannot process some content-aware services, for example, acceleration, traffic management, or filtering on the services.

To resolve a problem that the network operator cannot process a content-aware service, an intermediate proxy system of a network operator is deployed between a user side and a server of the content provider in the prior art. When the user side sends a service request to the server, a request message sent by the user side is intercepted by the intermediate proxy system. The intermediate proxy system replaces the server to establish a connection to the user side, and then the intermediate proxy system replaces the user side to establish a connection to the server. In the entire process of user access, both a data stream between the user side and the intermediate proxy system and a data stream between the intermediate proxy system and the server are encrypted data streams, and the intermediate proxy system has corresponding keys, and may decrypt the encrypted data streams. Therefore, the intermediate proxy system may obtain application content in the data stream, and process, based on the application content, a content-aware service.

During implementation of the present invention, the inventor finds that the prior art has at least the following problems: The intermediate proxy system can usually decrypt the encrypted data stream in a credit mode or a cooperation mode. To be specific, the content provider needs to share a key of the content provider with the intermediate proxy system of the network operator, so that the intermediate proxy system can decrypt the encrypted data stream based on the key, to obtain the application content in the data stream, and can further process the content-aware service. However, a network service provider usually does not want to provide a key for the intermediate proxy system.

### SUMMARY

To resolve the problem in the prior art, embodiments of the present invention provide a packet transmission method, apparatus, and system. The technical solutions are as follows:

A first aspect of the present invention provides a packet transmission method, where the method is applied to a server of a content provider, and the method includes: receiving an application request sent by a user side; obtaining encrypted data of original data requested by the application request; generating a first packet that includes the encrypted data; adding index information to the first packet, to obtain a second packet; and sending the second packet to a gateway of a network operator, where the index information is used to instruct the gateway to: determine a transmission parameter corresponding to the index information and send the encrypted data to the user side based on the transmission parameter, where the transmission parameter includes at least one of a resource type, a priority level, a delay, a packet loss rate, and a service type.

In the present invention, the server obtains the encrypted data corresponding to the application request sent by the user side, generates the first packet that includes the encrypted data, adds the index information to the first packet, to obtain the second packet, sends the second packet to the gateway of the network operator, and determines, by using the gateway, the transmission parameter corresponding to the index information, so that the gateway sends the first packet based on the transmission parameter. In other words, when the encrypted data is transmitted in the present invention, index information that can be identified by a gateway in an operator network is added to a packet, so that a transmission parameter can be determined based on only the index information. Therefore, when data is generally encrypted, a content-aware service of the network operator can be normally used without changing an existing encryption manner and an existing service procedure, and without compromising security and privacy of the service.

With reference to the first aspect, in a first possible implementation of the first aspect, the gateway includes a policy and charging enforcement function PCEF and a policy and charging rules function PCRF; and
before the obtaining encrypted data of original data requested by the application request, the method further includes: obtaining a first 5-tuple in the application request, where a source Internet Protocol IP address in the first 5-tuple is an IP address of the user side, a destination IP address is an IP address of the server, a source port number is a port number of the user side, and a destination port number is a port number of the server; exchanging the source IP address and the destination IP address in the first 5-tuple, and exchanging the source port number and the destination port number in the first 5-tuple, to obtain a second 5-tuple; searching a 5-tuple mapping table for the index information corresponding to the second 5-tuple, where each entry of the 5-tuple mapping table includes a 5-tuple and corresponding index information; and sending the second 5-tuple and the index information to the PCRF, where the PCRF is configured to generate a check policy that includes the second 5-tuple and the index information, the check policy is used to instruct the PCEF to: determine a to-be-verified packet based on the second 5-tuple and verify whether a 5-tuple in the to-be-verified packet and index information in the to-be-verified packet meet a preset relationship, and the preset relationship is used to indicate that data is allowed to be transmitted by using a transmission parameter corresponding to the index information.

With reference to the first possible implementation of the first aspect, in a second possible implementation of the first aspect, the adding index information to the first packet includes: searching the 5-tuple mapping table for the index information corresponding to the second 5-tuple, and adding the index information to the first packet.

With reference to the first or the second possible implementation of the first aspect, in a third possible implementation of the first aspect, before the sending the second 5-tuple and the index information to the PCRF, the method further includes: establishing a mutual trust relationship with the gateway by using the PCRF.

A second aspect of the present invention provides a packet transmission method, where the method is applied to an operator network, and the method includes:
receiving, by a gateway, a second packet that is sent by a server of a content provider and that includes index information, where the second packet is obtained by adding the index information to a first packet, and the first packet includes encrypted data generated based on original data requested by an application request sent by a user side;
determining, by the gateway, a transmission parameter corresponding to the index information, where the transmission parameter includes at least one of a resource type, a priority level, a delay, a packet loss rate, and a service type; and
sending, by the gateway, the encrypted data to the user side based on the transmission parameter.

In the present invention, the gateway receives the second packet that includes the index information. The second packet is obtained by adding the index information to the first packet, and the first packet includes the encrypted data generated based on the original data requested by the application request sent by the user side. The gateway determines the transmission parameter corresponding to the index information, and sends the first packet based on the transmission parameter. In other words, when the encrypted data is transmitted in the present invention, index information that can be identified by the gateway in the operator network is added to a packet, so that the gateway can determine a transmission parameter based on only the index information. Therefore, when data is generally encrypted, a content-aware service of the network operator can be normally used without changing an existing encryption manner and an existing service procedure, and without compromising security and privacy of the service.

With reference to the second aspect, in a first possible implementation of the second aspect, the determining, by the gateway, a transmission parameter corresponding to the index information includes: determining, by the gateway, the transmission parameter corresponding to the index information in the second packet according to a prestored transmission parameter mapping table, where each entry of the transmission parameter mapping table includes one piece of index information and at least one corresponding transmission parameter.

With reference to the first possible implementation of the first aspect, in a second possible implementation of the second aspect, the gateway includes a policy and charging rules function PCRF and a policy and charging enforcement function PCEF;
before the receiving, by a gateway, a second packet that is sent by a server of a content provider and that includes index information, the method further includes: receiving, by the PCRF, the index information and a second 5-tuple that are sent by the server, where the index information is index information that is corresponding to the second 5-tuple and that is found by the server according to a 5-tuple mapping table, and the second 5-tuple is obtained by the server by exchanging a source IP address and a destination IP address in a first 5-tuple in the application request, and exchanging a source port number and a destination port number in the first 5-tuple; and generating, by the PCRF, a check policy that includes the second 5-tuple and the index information, and sending the check policy to the PCEF; and receiving, by the PCEF, the check policy; and
the determining, by the gateway, the transmission parameter corresponding to the index information in the second packet according to a prestored transmission parameter mapping table includes: verifying, by the PCEF, the second packet according to the check policy, and after the verification succeeds, determining the transmission parameter corresponding to the index information according to the transmission parameter mapping table.

With reference to the second implementation of the second aspect, in a third possible implementation of the second aspect, the verifying, by the PCEF, the second packet according to the check policy includes:
checking, by the PCEF, whether a 5-tuple in the second packet is the same as the second 5-tuple in the check policy, and whether the index information in the second packet is the same as the index information in the check policy;
if the 5-tuple in the second packet is the same as the second 5-tuple in the check policy, and the index information in the second packet is the same as the index information in the check policy, checking, by the PCEF, whether the 5-tuple in the second packet and the index information in the second packet meet a preset relationship, where the preset relationship is used to indicate that data is allowed to be transmitted by using the transmission parameter corresponding to the index information; and
if the 5-tuple in the second packet and the index information in the second packet meet the preset relationship, determining that the second packet is successfully verified.

With reference to the second or the third implementation of the second aspect, in a third possible implementation of the second aspect, before the receiving, by the PCRF, the index information and a second 5-tuple that are sent by the server, the method further includes: establishing, by the gateway, a mutual trust relationship with the server by using the PCRF.

According to a third aspect, a packet transmission apparatus is provided, where the apparatus is applied to a server of a content provider, the apparatus includes at least one unit, and the at least one unit is configured to implement the packet transmission method according to the first aspect or at least one implementation of the first aspect.

According to a fourth aspect, a packet transmission apparatus is provided, where the apparatus is applied to a gateway in an operator network, the apparatus includes at least one unit, and the at least one unit is configured to implement the packet transmission method according to the second aspect or at least one implementation of the second aspect.

According to a fifth aspect, a server of a content provider is provided, where the server includes a processor, a transceiver, and a memory, and the transceiver and the memory are connected to the processor.

The transceiver is configured to implement, under control of the processor, communication with another entity, and the memory is configured to store a program instruction. The processor is configured to invoke the program instruction to implement the packet transmission method according to the first aspect or at least one implementation of the first aspect.

### BRIEF DESCRIPTION OF DRAWINGS

To describe the technical solutions in the embodiments of the present invention more clearly, the following briefly describes the accompanying drawings required for describing the embodiments.
FIG. 1 is a schematic structural diagram of a packet transmission system according to an embodiment of the present invention;
FIG. 2 is a schematic structural diagram of a packet transmission system according to an embodiment of the present invention;
FIG. 3 is a schematic structural diagram of a server of a content provider according to an embodiment of the present invention;
FIG. 4 is a method flowchart of a packet transmission method according to an embodiment of the present invention;
FIG. 5A and FIG. 5B are a method flowchart of another packet transmission method according to an embodiment of the present invention;
FIG. 6 is a block diagram of a packet transmission apparatus according to an embodiment of the present invention; and
FIG. 7 is a block diagram of another packet transmission apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

A "module" mentioned in this specification is a program or an instruction that is stored in a memory and that can implement some functions. A "unit" mentioned in this specification is a functional structure obtained through logic-based division. The "unit" may be implemented by hardware only, or implemented by a combination of software and hardware.

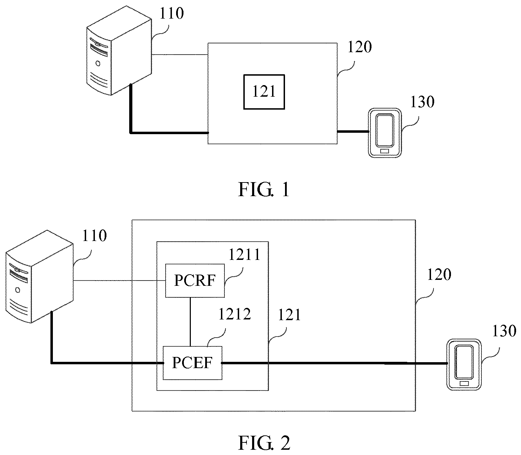

FIG. 1 is a schematic structural diagram of an example packet transmission system according to the present invention. The packet transmission system includes a server 110 of a content provider, an operator network 120, and a user side 130. The operator network is a network that is managed and operated by a network operator.

The server 110 is configured to: receive each application request that is sent by the user side 130 and that is defined by Hypertext Transfer Protocol (Hypertext Transfer Protocol, HTTP) 1.1/HTTP2 and another service, respond to the application request sent by the user side 130, and provide encrypted or unencrypted data for the user side 130 by using a network device provided by the network operator, namely, a gateway 121 in the operator network 120. The user side 130 is a common user terminal or any client that performs network access, for example, a video software client installed on a mobile phone of a user.

After receiving the application request sent by the user side 130, the server 110 obtains encrypted data of original data requested by the application request, generates a first packet that includes the encrypted data, and adds index information to the first packet, to obtain a second packet.

It should be noted that, before obtaining the encrypted data of the original data requested by the application request, the server 110 further needs to send control information in a signaling form to the gateway 121 in the operator network 120, so that the gateway 121 can process the second packet.

Optionally, referring to FIG. 2, the gateway 121 in the operator network 120 may include a policy management system. The policy management system is a Policy Control and Charging (Policy Control and Charging, PCC) system. The policy management system is configured to: verify the second packet, and transmit the encrypted data in the second packet based on a transmission parameter corresponding to the index information in the second packet.

Optionally, the gateway 121 includes a policy and charging rules function (Policy and Charging Rules Function, PCRF) 1211 and a policy and charging enforcement function (Policy and Charging Enforcement Function, PCEF) 1212. The PCRF 1211 and the PCEF 1212 may be located on a same hardware device, or may be located on different hardware devices.

In the present invention, the operator network 120 may further include a transmission device (not shown in the figure). The transmission device may be any one of a routing device, an intermediate device, or a conversion device.

In an implementation, after receiving the application request sent by the user side 130, the server 110 obtains a second 5-tuple based on a first 5-tuple in the application request, determines index information corresponding to the second 5-tuple, and sends the second 5-tuple and the corresponding index information to the PCRF 1211. After receiving the second 5-tuple and the corresponding index information, the PCRF 1211 sends, to the PCEF 1212, a check policy that includes the second 5-tuple and the corresponding index information. Then the server 110 obtains the encrypted data of the original data requested by the application request, generates the first packet that includes the encrypted data, adds the index information to the first packet, to obtain the second packet, and then sends the second packet to the PCEF 1212. The PCEF 1212 verifies a 5-tuple and the index information in the second packet according to the received check policy. When the verification succeeds, the PCEF 1212 determines a transmission parameter corresponding to index information that meets a preset relationship, and sends the encrypted data to the user side 130 based on the transmission parameter. The server 110 and the PCRF 1211 establish a mutual trust relationship before the server 110 sends the second 5-tuple and the index information to the PCRF 1211.

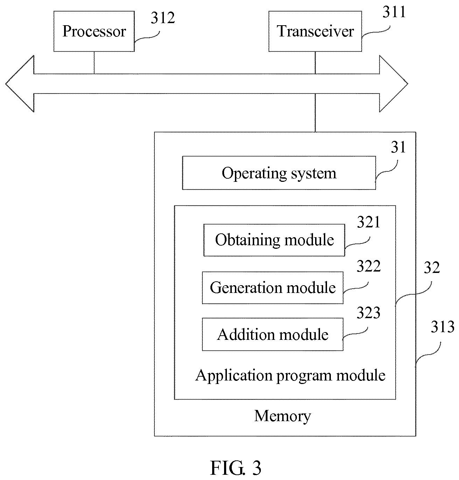

FIG. 3 is a schematic structural diagram of the server 110 according to an embodiment of the present invention. The server 110 includes a transceiver 311, a processor 312, and a memory 313.

The processor 312 is connected to the transceiver 311 and the memory 313.

The transceiver 311 may include one or more input/output ports, and is configured to implement, under control of the processor, communication with another entity. For example, the transceiver 311 is configured to: receive an application request sent by a user side, and send, to a gateway in an operator network, a second packet that includes index information. The index information is used to indicate a transmission parameter of encrypted data in the second packet.

The processor 312 includes one or more processing cores. The processor 312 performs various function applications and data processing by running a software program and a module, for example, obtains encrypted data of original data requested by the application request, generates a first packet that includes the encrypted data, and adds the index information to the first packet, to obtain the second packet.

The memory 313 stores a 5-tuple mapping table, and stores the original data and a data encryption policy that are used to respond to the application request sent by the user side. Each entry of the 5-tuple mapping table includes one 5-tuple and corresponding index information.

The memory 313 is further configured to store a system program and a program instruction. The memory 313 may store an operating system 31 and a program instruction 32 required by at least one function. The program instruction 32 may include an obtaining module 321, a generation module 322, an addition module 323, and the like. The obtaining module 321 is configured to obtain the encrypted data corresponding to the application request. The generation module 322 is configured to generate the first packet that includes the encrypted data. The addition module 323 is configured to add the index information to the first packet, to obtain the second packet.

The memory 313 may be implemented by any type of volatile or nonvolatile storage device or a combination thereof, for example, a static random access memory (static random access memory, SRAM), a dynamic random access memory (dynamic random access memory, DRAM), an electrically erasable programmable read-only memory (electrically erasable programmable read-only memory, EEPROM), an erasable programmable read-only memory (erasable programmable read-only memory, EPROM), a programmable read-only memory (programmable read-only memory, PROM), a read-only memory (read-only memory, ROM), a magnetic memory, a flash memory, a magnetic disk, or an optical disc.

A person skilled in the art may understand that the structure of the server 110 shown in FIG. 3 does not constitute a limitation on the server 110, and the server in the present invention may include more or fewer components than those shown in the figure, or may combine some components, or may have different component arrangements.

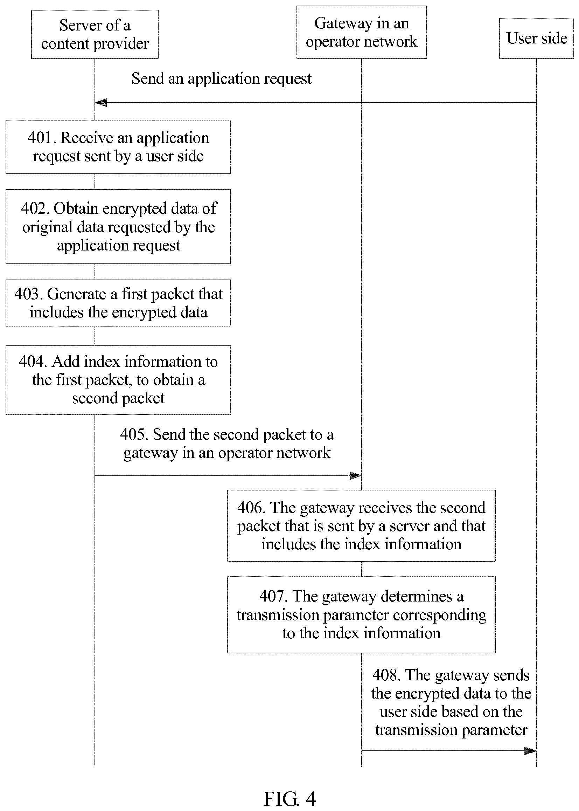

FIG. 4 is a flowchart of a packet transmission method according to an embodiment of the present invention. An example in which the method is applied to the packet transmission system shown in FIG. 1 is used for description in this embodiment. The method includes the following steps.

Step 401: A server receives an application request sent by a user side.

A user performs a data obtaining operation on the user side, and the user side sends, to the server, an application request used to obtain data. For example, the user watches a video by using a client of a content provider on a mobile phone. When the user taps a player control of the video, the client on the mobile phone sends, to a server of the content provider, an application request for obtaining the video, and the server receives the application request sent by the client.

Step 402: The server obtains encrypted data of original data requested by the application request.

The server obtains the original data requested by the application request, and encrypts the original data according to a preset data encryption policy, to obtain the encrypted data.

For example, when the application request is a request for a specific video provided by the content provider, the original data requested by the application request is a video resource of the specific video, and the server encrypts the video resource, to obtain encrypted data.

Step 403: The server generates a first packet that includes the encrypted data.

The server obtains a first 5-tuple from the application request. The first 5-tuple in the application request includes a source Internet Protocol (Internet Protocol, IP) address (an IP address of the user side), a source port number (a port number of the user side), a destination IP address of the user side (an IP address of the server), a destination port (a port number of the server), and a transport layer protocol number. The first 5-tuple is used to generate the first packet that mainly includes the encrypted data. Specifically, the server exchanges the source IP address and the destination IP address in the first 5-tuple, and exchanges the source port number and the destination port number, to obtain a second 5-tuple; and generates the first packet based on the second 5-tuple.

Step 404: The server adds index information to the first packet, to obtain a second packet.

The index information is information that is used to instruct a gateway in an operator network to determine a transmission parameter corresponding to the index information. In other words, the index information is used to determine a transmission parameter corresponding to the encrypted data.

The server determines the transmission parameter used to transmit the encrypted data, determines the index information based on the transmission parameter, and adds the determined index information to the first packet, to obtain the second packet.

Step 405: The server sends the second packet to a gateway in an operator network.

The server sends the second packet to a gateway of a network operator. The gateway has a capability of identifying the index information.

Step 406: The gateway in the operator network receives the second packet that is sent by the server and that includes the index information.

The second packet received by the gateway includes both the index information and the encrypted data of the original data requested by the application request sent by the user side.

Step 407: The gateway determines a transmission parameter corresponding to the index information.

The gateway determines the transmission parameter corresponding to the index information in the second packet according to a transmission parameter mapping table. Each entry of the transmission parameter mapping table includes one piece of index information and at least one corresponding transmission parameter.

Step 408: The gateway sends the encrypted data to the user side based on the transmission parameter.

In an implementation, the gateway directly sends the second packet to the user side based on the transmission parameter. After receiving the second packet, the user side obtains the encrypted data based on the second packet, and then parses the encrypted data, to obtain the original data corresponding to the application request.

In another implementation, the gateway deletes the index information in the second packet, to obtain the first packet, and sends the first packet to the user side based on the transmission parameter. After receiving the first packet, the user side obtains the encrypted data based on the first packet, and then parses the encrypted data, to obtain the original data corresponding to the application request.

Steps 401 to 405 may be implemented as an independent embodiment on the server side, and steps 406 to 408 may be implemented as an independent embodiment on the operator network side.

In conclusion, according to the packet transmission method provided in this embodiment of the present invention, the encrypted data corresponding to the application request sent by the user side is obtained, the first packet that includes the encrypted data is generated, the index information is added to the first packet, to obtain the second packet, and the second packet is sent to the gateway in the operator network. The gateway determines the transmission parameter corresponding to the index information, and sends the encrypted data to the user side based on the transmission parameter. In this embodiment of the present invention, the network operator does not need to decrypt the encrypted data by using a key, to obtain content transmitted by the content provider, and can determine the transmission parameter based on only the index information. Therefore, when data is generally encrypted, a content-aware service of the network operator can be normally used without changing an existing encryption manner and an existing service procedure, and without compromising security and privacy of the service.

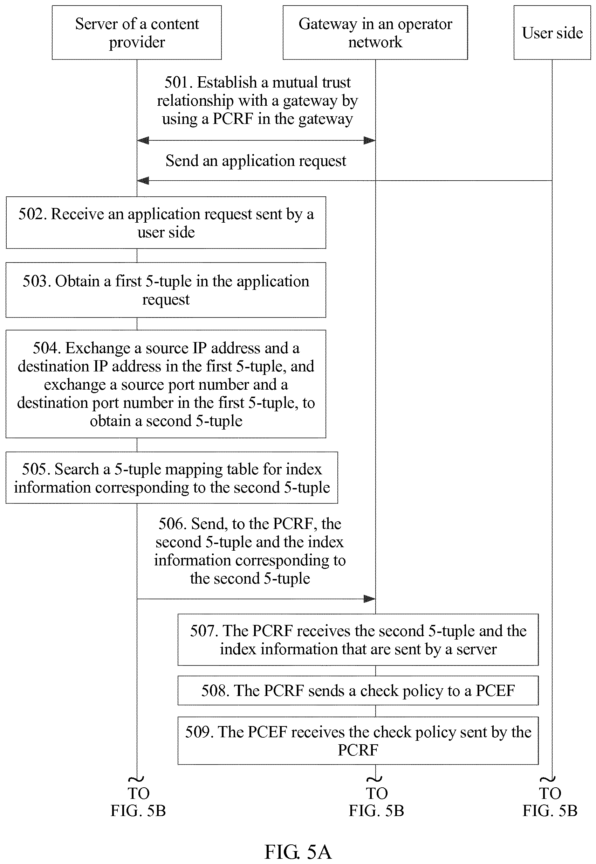

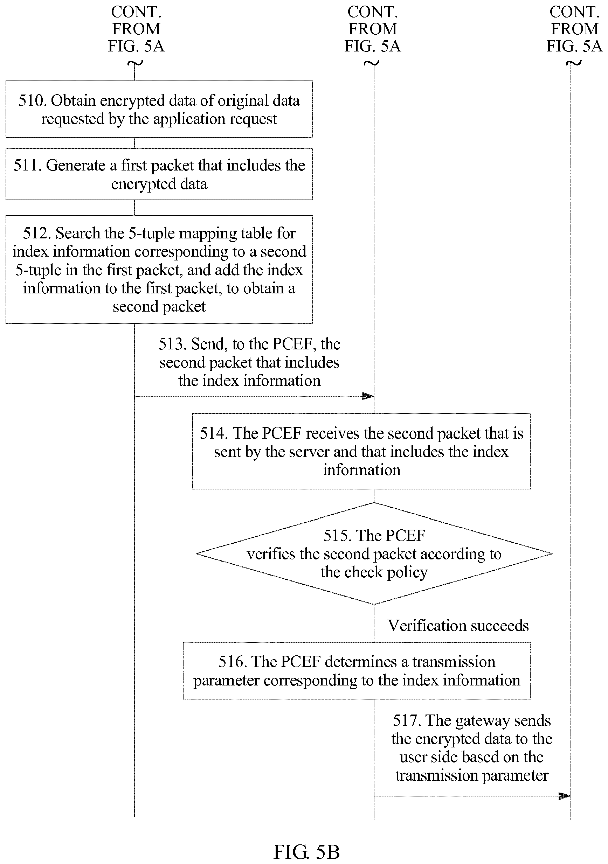

FIG. 5A and FIG. 5B are a flowchart of a packet transmission method according to another embodiment of the present invention. In this embodiment, the method is applied to the gateway 120 shown in FIG. 2. In this case, the gateway includes a PCEF and a PCRF. The method includes the following steps.

Step 501: A server establishes a mutual trust relationship with a gateway in an operator network by using a PCRF in the gateway.

Correspondingly, the PCRF and the server establish the mutual trust relationship.

The server provides the PCRF with an identifier that can represent an identity, such as an IP address, a certificate, or a Media Access Control (media access control, MAC) address, to establish the mutual trust relationship with the PCRF. Alternatively, the server and the PCRF establish the mutual trust relationship by using a tunnel mode in an Internet Protocol Security (Internet Protocol Security, IPsec) application. A manner in which the server and the PCRF establish the mutual trust relationship is not limited in this embodiment.

Step 502: The server receives an application request sent by a user side.

For a specific implementation of this step, refer to step 401 in FIG. 4.

Step 503: The server obtains a first 5-tuple in the application request.

A source IP address in the first 5-tuple is an IP address of the user side, a destination IP address is an IP address of the server, a source port number is a port number of the user side, and a destination port number is a port number of the server.

Step 504: The server exchanges a source IP address and a destination IP address in the first 5-tuple, and exchanges a source port number and a destination port number in the first 5-tuple, to obtain a second 5-tuple.

Step 505: The server searches a 5-tuple mapping table for index information corresponding to the second 5-tuple.

Each entry of the 5-tuple mapping table includes a correspondence between one 5-tuple and one piece of index information.

Table 1 schematically shows a correspondence between a 5-tuple and index information:

**Table 1**

| **5-tuple** | **Index information** |
|---|---|
| 5-tuple 1 (a source IP address 1, a source port 1, a destination IP address 1, a destination port 1, and a transport layer protocol number 1) | Index information 1 |
| 5-tuple 2 (a source IP address 2, a source port 2, a destination IP address 2, a destination port 2, and a transport layer protocol number 2) | Index information 2 |
| 5-tuple 3 (a source IP address 3, a source port 3, a destination IP address 3, a destination port 3, and a transport layer protocol number 3) | Index information 3 |
| ... | ... |

For example, after obtaining the first 5-tuple in the application request, the server exchanges the source IP address and the destination IP address in the first 5-tuple, exchanges the source port number and the destination port number in the first 5-tuple, to learn that the second 5-tuple is the 5-tuple 3 in Table 1, and therefore determines that the corresponding index information is the index information 3.

The 5-tuple mapping table may be obtained through joint negotiation by a content provider and a network operator. A manner of obtaining the correspondence is not limited in this embodiment.

Step 506: The server sends, to the PCRF, the second 5-tuple and the index information corresponding to the second 5-tuple.

The PCRF is configured to generate a check policy that includes the second 5-tuple and the index information. The check policy is used to instruct the PCEF to: determine a to-be-verified packet based on the second 5-tuple and the index information and verify whether a 5-tuple in the to-be-verified packet and index information in the to-be-verified packet meets a preset relationship. The preset relationship is used to indicate that data is allowed to be transmitted by using a transmission parameter corresponding to one piece of index information.

Step 507: The PCRF in the operator network receives the second 5-tuple and the index information that are sent by the server.

Step 508: The PCRF in the operator network sends a check policy to a PCEF.

The check policy includes the second 5-tuple and the index information that are received by the PCRF.

Step 509: The PCEF receives the check policy sent by the PCRF.

It should be noted that the server may not send the second 5-tuple and the index information to the policy management system. When the server does not send the second 5-tuple and the index information to the PCRF in the policy management system, the PCRF does not send the check policy to the PCEF. In other words, steps 506 to 509 are not performed.

Step 510: The server obtains encrypted data of original data requested by the application request.

The server obtains the original data requested by the application request, and encrypts the original data according to a preset data encryption policy, to obtain the encrypted data of the original data requested by the application request.

For example, when the application request is sent by a client of the content provider and is a request for a specific video, the original data requested by the application request is a video resource of the specific video, and the server encrypts the video resource, to obtain encrypted data.

Step 511: The server generates a first packet that includes the encrypted data.

For a specific implementation of this step, refer to step 403 in FIG. 4.

Step 512: The server searches the 5-tuple mapping table for index information corresponding to a second 5-tuple in the first packet, and adds the index information to the first packet, to obtain a second packet.

The 5-tuple mapping table may be obtained through joint negotiation by the content provider and the network operator. The manner of obtaining the correspondence is not limited in this embodiment.

Optionally, the index information is a quality of service class identifier (Quality of Service Class Identifier, QCI). An example in which the index information is a QCI is used for detailed description in this embodiment of the present invention. In this case, each entry of the 5-tuple mapping table includes one 5-tuple and one corresponding QCI value. For example, a 5-tuple 1 corresponds to a QCI 1, and the QCI 1 indicates that a QCI value is 1.

It should be noted that a manner of adding the index information to the first packet depends on negotiation between the content provider and the network operator. For example, the index information is added to a new TCP option field, or the index information is added to an enhanced Transport Layer Security (Transport Layer Security, TLS) field. The manner of adding the index information is not limited in this embodiment of the present invention.

Step 513: The server sends the second packet that includes the index information to the PCEF.

The index information is used to instruct the PCEF to: determine a transmission parameter corresponding to the index information and send the encrypted data based on the transmission parameter. The transmission parameter includes at least one of a resource type, a priority level, a delay, a packet loss rate, and a service type.

Optionally, a correspondence between index information and a transmission parameter may be obtained through joint negotiation by the content provider and the network operator. A manner of obtaining the correspondence is not limited in this embodiment.

For example, the index information is a QCI. Table 2 shows an example transmission parameter mapping table between a QCI and a transmission parameter.

**Table 2**

| **QCI** | **Resource Type (Resource type)** | **Priority Level (Priority level)** | **Packet Delay Budget (Delay)** | **Packet Error Loss Rate (Packet loss rate)** |
|---|---|---|---|---|
| 1 | GBR | 2 | 100 ms | 10⁻² |
| 2 | | 4 | 150 ms | 10⁻³ |
| 3 | | 3 | 50 ms | 10⁻³ |
| 4 | | 5 | 300 ms | 10⁻⁶ |
| 65 | | 0.7 | 75 ms | 10⁻² |
| 66 | | 2 | 100 ms | 10⁻² |
| 5 | Non-GBR | 1 | 100 ms | 10⁻⁶ |
| 6 | | 6 | 300 ms | 10⁻⁶ |
| 7 | | 7 | 100 ms | 10⁻³ |
| 8 | | 8 | 300 ms | 10⁻⁶ |
| 9 | | 9 | 300 ms | 10⁻⁶ |
| 69 | | 0.5 | 600 ms | 10⁻⁶ |
| 70 | | 5.5 | 200 ms | 10⁻⁶ |

It can be seen from Table 2 that there are 13 QCI values in total, and each QCI value corresponds to four transmission parameters: a resource type, a priority level, a delay, and a packet loss rate. The resource type includes guaranteed bit rate (Guaranteed Bit Rate, GBR) and Non-GBR. Data of a GBR type has a strict requirement on real-time performance.

Step 514: The PCEF in the operator network receives the second packet that is sent by the server and that includes the index information.

The second packet is obtained by adding the index information to the first packet. The first packet includes the encrypted data generated based on the original data requested by the application request sent by the user side.

Step 515: The PCEF in the operator network verifies the second packet according to the check policy.

The PCEF checks whether a 5-tuple in the second packet is the same as the 5-tuple in the check policy, and whether the index information in the second packet is the same as the index information in the check policy. If the 5-tuple in the second packet is the same as the 5-tuple in the check policy, and the index information in the second packet is the same as the index information in the check policy, the PCEF further checks whether the 5-tuple in the second packet and the index information in the second packet meet the preset relationship. If a check result is that the 5-tuple in the second packet and the index information in the second packet meet the preset relationship, the PCEF determines that the second packet is successfully verified. The preset relationship is used to indicate that data is allowed to be transmitted by using the transmission parameter corresponding to the index information.

The PCEF performs step 516 when checking that the index information in the second packet and the 5-tuple in the second packet meet the preset relationship, in other words, when the verification succeeds. When checking that the index information in the second packet and the 5-tuple in the second packet do not meet the preset relationship, the PCEF may modify the index information to index information that meets the preset relationship and transmit the second packet; or may discard the second packet. For example, the 5-tuple 1 is corresponding to the QCI 1 in the preset relationship. The PCEF checks that the 5-tuple in the second packet is the 5-tuple 1, and the index information is the QCI 2. Therefore, the PCEF modifies the QCI 2 to the QCI 1 and transmits the second packet; or discards the second packet.

It should be noted that when the server does not send the 5-tuple and the index information to the PCRF in the policy management system, in other words, when steps 506 to 509 are not performed, step 515 is not performed, and step 516 is directly performed.

Step 516: The PCEF in the operator network determines a transmission parameter corresponding to the index information.

Specifically, the PCEF determines the transmission parameter corresponding to the index information in the second packet according to a prestored 5-tuple mapping table.

It is assumed that after receiving the second packet, the PCEF learns that the index information in the second packet is the QCI 3. It can be learned from Table 2 that the transmission parameter includes a resource type of GBR, a priority level of 3, a delay of 50 ms, and a packet loss rate of 10⁻³.

Step 517: The gateway in the operator network sends the encrypted data to the user side based on the transmission parameter.

The PCEF in the operator network sends the determined transmission parameter to a transmission device, and the transmission device sends the encrypted data to the user side based on the transmission parameter.

The transmission device sends the encrypted data in the packet to the user side based on the transmission parameter and the 5-tuple in the second packet. For example, if the transmission parameter includes a resource type of GBR, a priority level of 3, a delay of 50 ms, and a packet loss rate of 10⁻³, traffic that meets the transmission parameter that includes the resource type of GBR, the priority level of 3, the delay of 50 ms, and the packet loss rate of 10⁻³ is allocated to the encrypted data in the packet, and the encrypted data is transmitted based on the allocated traffic.

In an implementation, the transmission device sends the second packet to the user side based on the transmission parameter. After receiving the second packet, the user side obtains the encrypted data based on the second packet, and then parses the encrypted data, to obtain the original data corresponding to the application request.

In another implementation, the transmission device deletes the index information in the second packet, to obtain the first packet, and sends the first packet to the user side based on the transmission parameter. After receiving the first packet, the user side obtains the encrypted data based on the first packet, and then parses the encrypted data, to obtain the original data corresponding to the application request.

Steps 501 to 506 and steps 510 to 513 may be implemented as an independent embodiment on the server side, and steps 507 to 509 and steps 514 to 517 may be implemented as an independent embodiment on the operator network side.

In conclusion, according to the packet transmission method provided in this embodiment of the present invention, the encrypted data corresponding to the application request sent by the user side is obtained, the first packet that includes the encrypted data is generated, the index information is added to the first packet, to obtain the second packet, and the second packet is sent to the gateway in the operator network. The gateway determines the transmission parameter corresponding to the index information, and sends the encrypted data to the user side based on the transmission parameter. In this embodiment of the present invention, the network operator does not need to decrypt the encrypted data by using a key, to obtain content transmitted by the content provider, and can determine the transmission parameter based on only the index information. Therefore, when data is generally encrypted, a content-aware service of the network operator can be normally used without changing an existing encryption manner and an existing service procedure, and without compromising security and privacy of the service.

In addition, in the present invention, the server further sends the index information and the 5-tuple to the PCRF of the network operator. The PCRF delivers the check policy that includes the index information and the 5-tuple to the PCEF. The PCEF checks, according to the check policy, whether index information in a received packet and a 5-tuple in the packet meet the preset relationship. When the index information in the packet and the 5-tuple in the packet meet the preset relationship, the PCEF determines a transmission parameter corresponding to the index information. This can effectively avoid a problem that the PCEF transmits encrypted data in the packet by using a transmission parameter that is not allowed by the network operator.

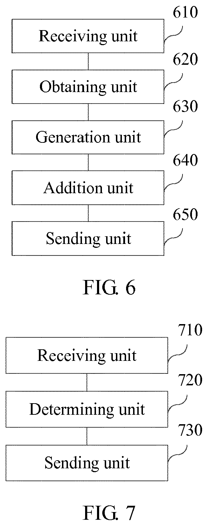

FIG. 6 is a block diagram of a packet transmission apparatus according to an embodiment of the present invention. The packet transmission apparatus may be implemented as all or a part of a server by using software, hardware, or a combination thereof. The packet transmission apparatus includes:
a receiving unit 610, configured to implement functions of steps 401 and 502;
an obtaining unit 620, configured to implement functions of steps 402, 503, 504, 505, and 510;
a generation unit 630, configured to implement functions of steps 403 and 511;
an addition unit 640, configured to implement functions of steps 404 and 512; and
a sending unit 650, configured to implement functions of steps 405, 506, and 513.

In addition, the packet transmission apparatus may further include an establishment unit, configured to implement a function of step 501.

For related details, refer to the method embodiments in FIG. 4, FIG. 5A, and FIG. 5B.

It should be noted that the receiving unit 610 and the sending unit 650 may be implemented by using a transceiver of a server of a content provider. The obtaining unit 620, the generating unit 630, and the addition unit 640 may be implemented by executing a program instruction in a memory by a processor of the server.

FIG. 7 is a block diagram of a packet transmission apparatus according to another embodiment of the present invention. The packet transmission apparatus may be implemented as all or a part of an operator network by using software, hardware, or a combination thereof. The packet transmission apparatus may be a gateway in the operator network, and the apparatus includes:
a receiving unit 710, configured to implement a function of step 406;
a sending unit 720, configured to implement functions of steps 408 and 517; and
a determining unit 730, configured to implement a function of step 407.

For related details, refer to the method embodiment in FIG. 4.

In addition, the gateway further includes a policy and charging rules function PCRF and a policy and charging enforcement function PCEF. The PCRF is configured to implement functions of steps 501, 507, and 508. The PCEF is configured to implement functions of steps 514 to 516.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for a detailed working process of the foregoing apparatus and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division may merely be logical function division and may be other division in actual implementation. For example, a plurality of units or components may be combined or integrated into another system, or some features may be ignored or not performed.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A packet transmission method, wherein the method is applied to a server of a content provider, and the method comprises:
receiving an application request sent by a user side;
obtaining encrypted data of original data requested by the application request;
generating a first packet that comprises the encrypted data;
adding index information to the first packet, to obtain a second packet; and
sending the second packet to a gateway in an operator network, wherein the index information is used to instruct the gateway to: determine a transmission parameter corresponding to the index information and send the encrypted data to the user side based on the transmission parameter, wherein the transmission parameter comprises at least one of a resource type, a priority level, a delay, a packet loss rate, and a service type.

2. The method according to claim 1, wherein the gateway comprises a policy and charging enforcement function PCEF and a policy and charging rules function PCRF; and
before the obtaining encrypted data of original data requested by the application request, the method further comprises:
obtaining a first 5-tuple in the application request, wherein a source Internet Protocol IP address in the first 5-tuple is an IP address of the user side, a destination IP address is an IP address of the server, a source port number is a port number of the user side, and a destination port number is a port number of the server;
exchanging the source IP address and the destination IP address in the first 5-tuple, and exchanging the source port number and the destination port number in the first 5-tuple, to obtain a second 5-tuple;
searching a 5-tuple mapping table for the index information corresponding to the second 5-tuple, wherein each entry of the 5-tuple mapping table comprises a 5-tuple and corresponding index information; and
sending the second 5-tuple and the index information to the PCRF, wherein the PCRF is configured to generate a check policy that comprises the second 5-tuple and the index information, the check policy is used to instruct the PCEF to: determine a to-be-verified packet based on the second 5-tuple and verify whether a 5-tuple in the to-be-verified packet and index information in the to-be-verified packet meet a preset relationship, and the preset relationship is used to indicate that data is allowed to be transmitted by using a transmission parameter corresponding to the index information.

3. The method according to claim 2, wherein the adding index information to the first packet comprises:
searching the 5-tuple mapping table for the index information corresponding to the second 5-tuple, and adding the index information to the first packet.

4. The method according to claim 2 or 3, wherein before the sending the second 5-tuple and the index information to the PCRF, the method further comprises:
establishing a mutual trust relationship with the gateway by using the PCRF.

5. A packet transmission method, wherein the method is applied to an operator network, and the method comprises:
receiving, by a gateway, a second packet that is sent by a server of a content provider and that comprises index information, wherein the second packet is obtained by adding the index information to a first packet, and the first packet comprises encrypted data generated based on original data requested by an application request sent by a user side;
determining, by the gateway, a transmission parameter corresponding to the index information, wherein the transmission parameter comprises at least one of a resource type, a priority level, a delay, a packet loss rate, and a service type; and
sending, by the gateway, the encrypted data to the user side based on the transmission parameter.

6. The method according to claim 5, wherein the determining, by the gateway, a transmission parameter corresponding to the index information comprises:
determining, by the gateway, the transmission parameter corresponding to the index information in the second packet according to a prestored transmission parameter mapping table, wherein each entry of the transmission parameter mapping table comprises one piece of index information and at least one corresponding transmission parameter.

7. The method according to claim 6, wherein the gateway comprises a policy and charging rules function PCRF and a policy and charging enforcement function PCEF;
before the receiving, by a gateway, a second packet that is sent by a server of a content provider and that comprises index information, the method further comprises:
receiving, by the PCRF, the index information and a second 5-tuple that are sent by the server, wherein the index information is index information that is corresponding to the second 5-tuple and that is found by the server according to a 5-tuple mapping table, and the second 5-tuple is obtained by the server by exchanging a source IP address and a destination IP address in a first 5-tuple in the application request, and exchanging a source port number and a destination port number in the first 5-tuple; and
generating, by the PCRF, a check policy that comprises the second 5-tuple and the index information, and sending the check policy to the PCEF; and receiving, by the PCEF, the check policy; and
the determining, by the gateway, the transmission parameter corresponding to the index information in the second packet according to a prestored transmission parameter mapping table comprises:
verifying, by the PCEF, the second packet according to the check policy, and after the verification succeeds, determining the transmission parameter corresponding to the index information according to the transmission parameter mapping table.

8. The method according to claim 7, wherein the verifying, by the PCEF, the second packet according to the check policy comprises:
checking, by the PCEF, whether a 5-tuple in the second packet is the same as the second 5-tuple in the check policy, and whether the index information in the second packet is the same as the index information in the check policy;
if the 5-tuple in the second packet is the same as the second 5-tuple in the check policy, and the index information in the second packet is the same as the index information in the check policy, checking, by the PCEF, whether the 5-tuple in the second packet and the index information in the second packet meet a preset relationship, wherein the preset relationship is used to indicate that data is allowed to be transmitted by using the transmission parameter corresponding to the index information; and
if the 5-tuple in the second packet and the index information in the second packet meet the preset relationship, determining that the second packet is successfully verified.

9. The method according to claim 7 or 8, wherein before the receiving, by the PCRF, the index information and a second 5-tuple that are sent by the server, the method further comprises:
establishing, by the gateway, a mutual trust relationship with the server by using the PCRF.

10. A packet transmission apparatus, wherein the apparatus is applied to a server of a content provider, and the apparatus comprises:
a receiving unit, configured to receive an application request sent by a user side;
an obtaining unit, configured to obtain encrypted data of original data requested by the application request received by the receiving unit;
a generation unit, configured to generate a first packet that comprises the encrypted data obtained by the obtaining unit;
an addition unit, configured to add index information to the first packet generated by the generation unit, to obtain a second packet; and
a sending unit, configured to: send the second packet to a gateway in an operator network, wherein the index information is used to instruct the gateway to: determine a transmission parameter corresponding to the index information and send the encrypted data to the user side based on the transmission parameter, wherein the transmission parameter comprises at least one of a resource type, a priority level, a delay, a packet loss rate, and a service type.

11. The apparatus according to claim 10, wherein the gateway comprises a policy and charging enforcement function PCEF and a policy and charging rules function PCRF;
the obtaining unit is further configured to: obtain a first 5-tuple in the application request, wherein a source Internet Protocol IP address in the first 5-tuple is an IP address of the user side, a destination IP address is an IP address of the server, a source port number is a port number of the user side, and a destination port number is a port number of the server; exchange the source IP address and the destination IP address in the first 5-tuple, and exchange the source port number and the destination port number in the first 5-tuple, to obtain a second 5-tuple; and search a 5-tuple mapping table for the index information corresponding to the second 5-tuple, wherein each entry of the 5-tuple mapping table comprises a 5-tuple and corresponding index information; and
the sending unit is further configured to: send the second 5-tuple and the index information to the PCRF, wherein the PCRF is configured to generate a check policy that comprises the second 5-tuple and the index information, the check policy is used to instruct the PCEF to: determine a to-be-verified packet based on the second 5-tuple and verify whether a 5-tuple in the to-be-verified packet and index information in the to-be-verified packet meet a preset relationship, and the preset relationship is used to indicate that data is allowed to be transmitted by using a transmission parameter corresponding to the index information.

12. The apparatus according to claim 11, wherein the addition unit is further configured to:
search the 5-tuple mapping table for index information corresponding to a 5-tuple in the first packet, and add the index information to the first packet, wherein each entry of the 5-tuple mapping table comprises a 5-tuple and corresponding index information.

13. The apparatus according to claim 11 or 12, wherein the apparatus further comprises:
an establishment unit, configured to establish a mutual trust relationship with the gateway by using the PCRF.

14. A packet transmission apparatus, wherein the apparatus is a gateway in an operator network, and the apparatus comprises:
a receiving unit, configured to receive a second packet that is sent by a server of a content provider and that comprises index information, wherein the second packet is obtained by adding the index information to a first packet, and the first packet comprises encrypted data generated based on original data requested by an application request sent by a user side;
a determining unit, configured to determine a transmission parameter corresponding to the index information, wherein the transmission parameter comprises at least one of a resource type, a priority level, a delay, a packet loss rate, and a service type; and
a sending unit, configured to send the encrypted data to the user side based on the transmission parameter.

15. The apparatus according to claim 14, wherein
the determining unit is specifically configured to determine the transmission parameter corresponding to the index information in the second packet according to a prestored transmission parameter mapping table, wherein each entry of the transmission parameter mapping table comprises one piece of index information and at least one corresponding transmission parameter.

16. The apparatus according to claim 15, wherein the gateway further comprises a policy and charging rules function PCRF and a policy and charging enforcement function PCEF, wherein
the PCRF is configured to receive the index information and a second 5-tuple that are sent by the server, wherein the index information is index information that is corresponding to the second 5-tuple and that is found by the server according to the 5-tuple mapping table, and the second 5-tuple is obtained by the server by exchanging a source IP address and a destination IP address in a first 5-tuple in the application request, and exchanging a source port number and a destination port number in the first 5-tuple;
the PCRF is further configured to: generate a check policy that comprises the second 5-tuple and the index information, and send the check policy to the PCEF; and
the PCEF is configured to receive the check policy, verify the second packet according to the check policy, and after the verification succeeds, determine the transmission parameter corresponding to the index information according to the transmission parameter mapping table.

17. The apparatus according to claim 16, wherein
when verifying the second packet, the PCEF is specifically configured to: check whether a 5-tuple in the second packet is the same as the second 5-tuple in the check policy, and whether the index information in the second packet is the same as the index information in the check policy; if the 5-tuple in the second packet is the same as the second 5-tuple in the check policy, and the index information in the second packet is the same as the index information in the check policy, check whether the 5-tuple in the packet and the index information in the packet meet a preset relationship, wherein the preset relationship is used to indicate that data is allowed to be transmitted by using the transmission parameter corresponding to the index information; and if the 5-tuple in the second packet and the index information in the second packet meet the preset relationship, determine that the packet is successfully verified.

18. The apparatus according to claim 15 or 16, wherein the PCRF is further configured to establish a mutual trust relationship between the gateway and the server of the content provider.
